(19) Europäisches Patentamt / European Patent Office / Office européen des brevets

(11) **EP 4 668 971 A1**

(12) **EUROPEAN PATENT APPLICATION**
published in accordance with Art. 153(4) EPC

(43) Date of publication:
**24.12.2025 Bulletin 2025/52**

(21) Application number: **23921904.1**

(22) Date of filing: **16.02.2023**

(51) International Patent Classification (IPC):
**H04W 72/23** $^{(2023.01)}$

(52) Cooperative Patent Classification (CPC):
**H04W 72/044; H04W 72/23**

(86) International application number:
**PCT/CN2023/076606**

(87) International publication number:
**WO 2024/168750 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **LUO, Xingyi**
**Beijing 100085 (CN)**

(74) Representative: **Dehns Germany Partnerschaft mbB**
**Theresienstraße 6-8**
**80333 München (DE)**

(54) **UPLINK TRANSMISSION POWER ADJUSTMENT METHOD AND APPARATUS, DEVICE, AND STORAGE MEDIUM**

(57) The present application relates to the field of mobile communications, and discloses an uplink transmission power adjustment method and apparatus, a device, and a storage medium. The method comprises: a terminal receives indication information, wherein the indication information is used for indicating a closed-loop power adjustment value of each TRP/antenna panel, and/or is used for indicating whether accumulation of the closed-loop power adjustment value of each TRP/antenna panel is to be reset, and the closed-loop power adjustment value is used for adjusting uplink transmission powers of uplink channels sent by a plurality of antenna panels to a plurality of TRPs at the same time. The present application provides a solution for explicitly indicating TRPs or antenna panels by means of indication information, ensures that a terminal performs power adjustment or resets accumulation for one TRP or antenna panel, and ensures the accuracy of the terminal adjusting or resetting closed-loop powers, thereby improving the reliability of terminal communication.

Terminal — Network device

Step 401, the network device sends indication information, in which the indication information indicates a closed-loop power adjustment state value of each TRP or antenna panel, and/or indicates whether to reset an accumulation of closed-loop power adjustment state values of each TRP or antenna panel, and the closed-loop power adjustment state value is used to adjust an UL transmission power of UL channels simultaneously transmitted from a plurality of antenna panels to a plurality of TRPs

Step 402, the terminal receives the indication information

FIG. 4

**Description**

**TECHNICAL FIELD**

The disclosure relates to a field of mobile communication technology, in particular to a method for adjusting an uplink (UL) transmission power, an apparatus for adjusting an UL transmission power device, a related device and a related storage medium.

**BACKGROUND**

In a mobile communication system, a network device may communicate with a terminal, and may also configure a power control parameter to enable the terminal to control the power based on the configured power control parameter.

In detail, the power control parameter configured by the network device for the terminal includes an open-loop power control parameter and a closed-loop power control parameter, and the power control parameter corresponding to each time domain location may be different, so the terminal accumulates the open-loop power control parameter and the closed-loop power control parameter for a certain period of time, and then carries out the power control based on an obtained transmission power.

However, because the terminal is unable to differentiate between a Transmission Reception Point (TRP) and an antenna panel when performing power adjustment on a closed-loop power adjustment state value, in which causes adjustment to be made to the closed-loop power adjustment state value based on a plurality of TRPs or antenna panels, which, in turn, leads to low accuracy of the adjusted closed-loop power.

**SUMMARY**

The embodiments of the disclosure provide a method for adjusting an UL transmission power, an apparatus for adjusting an UL transmission power device, a related device and a related storage medium, to assist a terminal in performing an UL transmission with an appropriate power, which ensures a sufficient transmit rate without causing great interference to transmissions of other terminals. The technical solutions are provided below.

According to a first aspect of the disclosure, a method for adjusting an UL transmission power is provided. The method is performed by a terminal, and includes:

receiving indication information, in which the indication information indicates a closed-loop power adjustment state value of each TRP or antenna panel and/or indicates whether to reset an accumulation of closed-loop power adjustment state values of each TRP or antenna panel, and the closed-loop power adjustment state value is used to adjust an UL transmission power of UL channels simultaneously transmitted from a plurality of antenna panels to a plurality of TRPs.

According to a second aspect of the disclosure, a method for adjusting an UL transmission power is provided. The method is performed by a network device, and includes:

sending indication information, in which the indication information indicates a closed-loop power adjustment state value of each TRP or antenna panel, and/or indicates whether to reset an accumulation of closed-loop power adjustment state values of each TRP or antenna panel, and the closed-loop power adjustment state value is used to adjust an UL transmission power of UL channels simultaneously transmitted from a plurality of antenna panels to a plurality of TRPs.

According to a third aspect of the disclosure, an apparatus for adjusting an UL transmission power is provided. The apparatus includes:

a receiving module, configured to receive indication information, in which the indication information indicates a closed-loop power adjustment state value of each TRP or antenna panel, and/or indicates whether to reset an accumulation of closed-loop power adjustment state values of each TRP or antenna panel, and the closed-loop power adjustment state value is used to adjust an UL transmission power of UL channels simultaneously transmitted from a plurality of antenna panels to a plurality of TRPs.

According to a fourth aspect of the disclosure, an apparatus for adjusting an UL transmission power is provided. The apparatus includes:

a sending module, configured to send indication information, in which the indication information indicates a closed-loop power adjustment state value of each TRP or antenna panel, and/or indicates whether to reset an accumulation of closed-loop power adjustment state values of each TRP or antenna panel, and the closed-loop power adjustment state value is used to adjust an UL transmission power of UL channels simultaneously transmitted from a plurality of antenna panels to a plurality of TRPs.

According to a fifth aspect of the disclosure, a terminal is provided. The terminal includes: a processor, a transceiver connected to the processor, and a memory for storing instructions executable by the processor. The processor is configured to load and execute the executable instructions to implement the method for adjusting the UL transmission power as described above.

According to a sixth aspect of the disclosure, a network device is provided. The network device includes: a processor, a transceiver connected to the processor, and a memory for storing instructions executable by the processor. The processor is configured to load and execute the executable instructions to implement the method for adjusting the UL transmission power as described above.

According to a seventh aspect of the disclosure, a communication system is provided. The communication system includes a terminal and a network device. The terminal is used for implementing the method for adjusting the UL transmission power as described in the first aspect, and the network device is used for implementing the method for adjusting the UL transmission power as described in the second aspect.

According to an eighth aspect of the disclosure, a computer-readable storage medium is provided. The computer-readable storage medium stores executable program codes, and the executable program codes are loaded and executed by a processor to implement the method for adjusting the UL transmission power as described above.

According to a ninth aspect of the disclosure, a chip is provided. The chip includes a programmable logic circuit and/or a program instruction. When the chip is running on a terminal or a network device, the method for adjusting the UL transmission power as described above is implemented.

According to a tenth aspect of the disclosure, a computer program product is provided. When the computer program product is executed by a processor of a terminal or a network device, the method for adjusting the UL transmission power as described above is implemented.

The application provides a scheme for explicitly indicating a TRP or an antenna panel through indication information to ensure that the power adjustment or accumulation resetting by the terminal is directed to one TRP or one antenna panel, to ensure an accuracy of the terminal's adjustment or the resetting of the closed-loop power to enable the terminal to perform an UL transmission with an appropriate power, to ensure a sufficient transmit rate without causing significant interference with transmissions from other terminals.

## BRIEF DESCRIPTION OF THE DRAWINGS

In order to clearly illustrate technical solutions of the embodiments of the disclosure, a brief description of drawings used in the embodiments of the disclosure is given below. Obviously, the drawings in the following description are only part of the embodiments of the disclosure, and for those skilled in the art, other drawings can be obtained according to these drawings without inventive works.

FIG. 1 is a block diagram of a communication system provided by an example embodiment of the disclosure.

FIG. 2 is a block diagram of another communication system provided by an example embodiment of the disclosure.

FIG. 3 is a schematic diagram of a transmission channel provided by an example embodiment of the disclosure.

FIG. 4 is a flowchart of a method for adjusting an UL transmission power provided by an example embodiment of the disclosure.

FIG. 5 is a schematic diagram of an apparatus for adjusting an UL transmission power provided by an example embodiment of the disclosure.

FIG. 6 is a schematic diagram of another apparatus for adjusting an UL transmission power provided by an example embodiment of the disclosure.

FIG. 7 is a schematic diagram of yet another apparatus for adjusting an UL transmission power provided by an example embodiment of the disclosure.

FIG. 8 is a schematic structural diagram of a communication device provided by an example embodiment of the disclosure.

## DETAILED DESCRIPTION

In order to make the objectives, technical solutions and advantages of the disclosure more clear, the implementations of the disclosure will be further described in detail below with reference to the accompanying drawings.

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the disclosure. Instead, they are merely examples of apparatuses and methods consistent with aspects related to the disclosure as recited in the attached claims.

The terms used in the disclosure are only for the purpose of describing specific embodiments, and are not intended to limit the disclosure. The singular forms of "a" and "the" used in the disclosure and the attached claims are also intended to include plural forms, unless the context clearly indicates other meanings. It should also be understood that the term "and/or" as used herein refers to and includes any or all possible combinations of one or more associated listed items.

It is understandable that although the terms "first", "second" and "third" are used in the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "upon" or "in response to determining".

It should be noted that user information (including but not limited to User Equipment (UE) information, user personal information, etc.), data (including but not limited to data used for analysis, stored data, displayed data, etc.) and signals involved in this application are all authorized by relevant users or fully authorized by all parties, and collection, usage and processing of relevant data all comply with relevant laws, regulations and standards of relevant countries and regions.

The application scenarios of this application are introduced first.

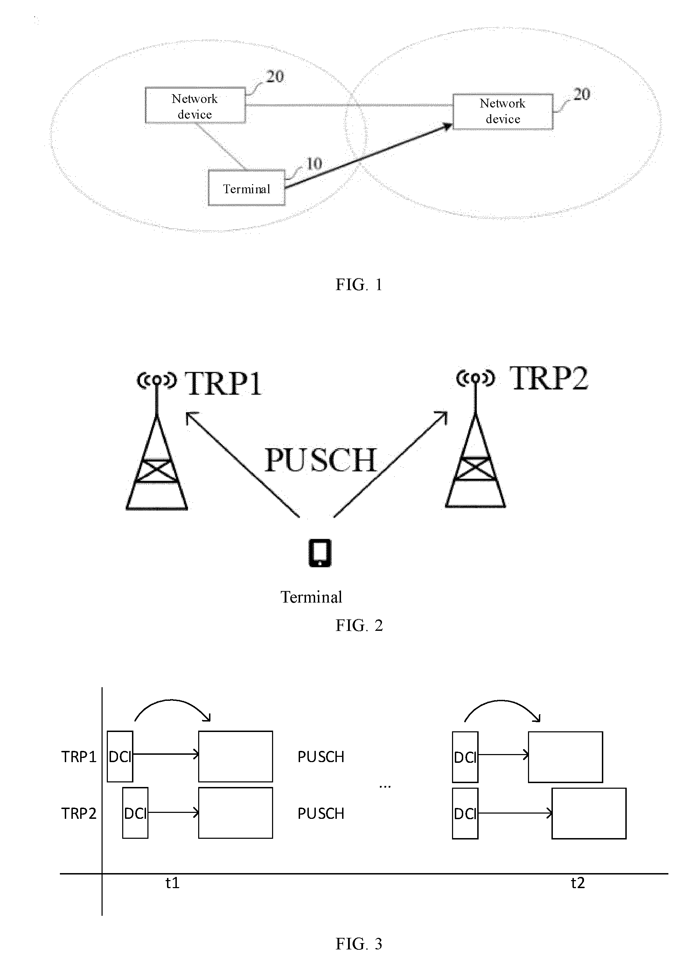

FIG. 1 is a block diagram of a communication system provided by an example embodiment of the disclosure. The communication system includes a terminal 10 and a network device 20.

There are often a plurality of terminals 10, and one or more terminals 10 may be distributed in a cell managed by the network device 20. The terminal 10 may include various handheld devices, vehicle-mounted devices, wearable devices, computing devices with wireless communication functions or other processing devices connected to a wireless modem, as well as various types of user equipments (UEs) and mobile stations (MSs), etc. For convenience of description, in the embodiment of the disclosure, the above-mentioned devices are collectively referred to as terminals.

The network device 20 is a device deployed in an access network to provide wireless communication functions for the terminal 10. For the convenience of description, in the embodiment of the disclosure, the above-mentioned devices that provide wireless communication functions for the terminal 10 are collectively referred to as network devices. A connection may be established between the network device 20 and the terminal 10 via an air interface for communications, such as interaction of signaling and data. There may be a plurality of network devices 20, and two adjacent network devices 20 may communicate with each other via wired or wireless means. The terminal 10 may beam reports between different network devices 20, that is, establish connections with different network devices 20.

The network device 20 may include various types of macro base stations, micro base stations, relay stations, access points, etc. In systems using different wireless access technologies, the names of devices with the capabilities of the network device may be different. For example, in a 5G new radio (NR) system, it is called a gNB (which is short for gNodeB). As communication technology evolves, the name "network device" may change.

In an embodiment of the disclosure, the network device 20 is provided with at least two TRPs. Or, at least two network devices 20, each of which is provided with at least one TRP, that is, at least two network devices 20 are provided with at least two TRPs. That is, the at least two TRPs may be from the same cell or different cells.

In some embodiments, if four TRPs are provided on the network device 20, and the terminal 10 can be served by the four TRPs, the terminal can perform data transmission based on the four TRPs.

For example, as illustrated in FIG. 2 and FIG. 3, if the network device 20 is provided with two TRPs, namely TRP1 and TRP2, the terminal may send Physical Uplink Shared Channels (PUSCHs) to the TRP1 and the TRP2 simultaneously. As illustrated in FIG. 3, the PUSCH received by the TRP1 is scheduled by one downlink control information (DCI), the PUSCH received by the TRP2 is scheduled by another DCI, and the PUSCH received by the TRP1 is overlapped with the PUSCH received by the TRP2 in the time domain.

In detail, when the terminal transmits UL data to the TRPs, it first determines an UL transmission power based on an open-loop power control parameter and a closed-loop power control parameter, and then transmits the UL data to each TRP according to the determined UL transmission power.

For example, power control for a PUSCH is described as an illustration of how to determine a transmission power of the PUSCH. The transmission power of the PUSCH is obtained by the following equation:

$$P = \min\{P_{CMAX}, P_0 + \alpha * PL + f(l) + \Delta\}$$

where $f(l)$ represents a power control adjustment state value, which is also known as a closed-loop power control parameter. The value of $f(l)$ is obtained by $f(l) = \delta(l)$ or $f(l,i) = f(i - i_0, l) + \sum \delta$, which is indicated by a higher layer parameter, where $\delta$ represents a value indicated by a Transmission power Control (TPC) field in DCI. Moreover, $l$ represents a closed loop index, $i$ represents a time, which is used to indicate a current time, $P_{CMAX}$ represents a maximum allowable transmission power, $P_0$ represents an open-loop received power target value, and the target received power is an expected received power configured by the network device, $\alpha$ represents a partial path loss compensation factor, $P_L$ represents a downlink path loss estimation value, and $\Delta$ represents other adjustment quantities.

The "5G NR system" in the embodiment of the disclosure may also be referred to as 5G system or NR system, which is understood by those skilled in the art. The technical solution described in the embodiment of the disclosure may be applied to the 5G NR system, or future evolved systems of the 5G NR system.

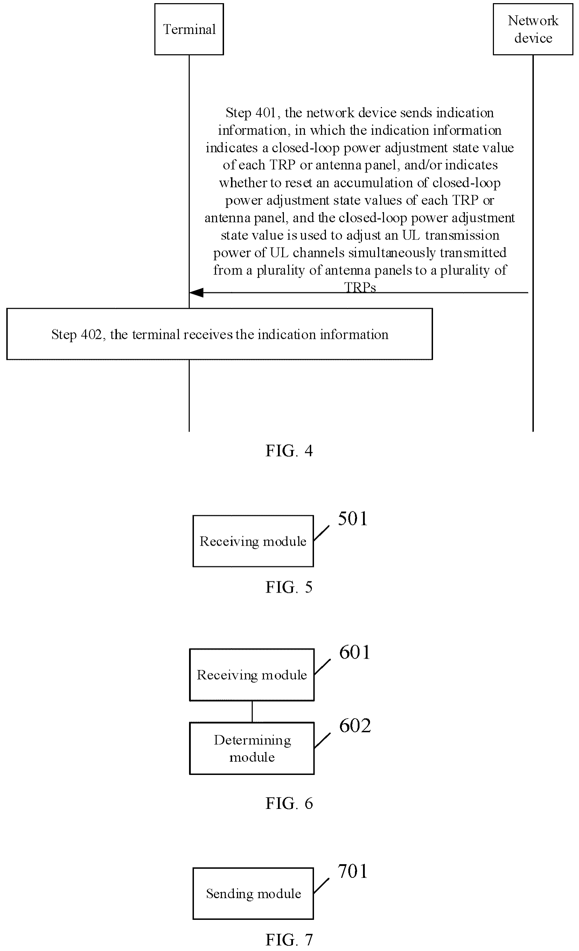

FIG. 4 is a flowchart of a method for adjusting an UL transmission power provided by an example embodiment of the disclosure. In an embodiment of the disclosure, the method is applied to the terminal and the network device shown in FIG. 1. The method includes at least part of the contents described below.

At step 401, the network device sends indication information, in which the indication information indicates a closed-loop power adjustment state value of each TRP or antenna panel, and/or indicates whether to reset an accumulation of closed-loop power adjustment state values of each TRP or antenna panel, and the closed-loop power adjustment state value is used to adjust an UL transmission power of UL channels simultaneously transmitted from a plurality of antenna panels to a plurality of TRPs.

The antenna panel is used for the terminal for UL transmission or downlink transmission. The antenna panel may be understood as a group of antennas capable of beamforming to form a directional signals that transmits information to the TRP in a particular beam direction and one panel can only send signals in one beam direction at a time. In some embodiments, the antenna panel may also be referred to as a beam, a transmission identifier or other names used for UL transmission, which is not limited by the embodiments of the disclosure. The transmission identifier indicates identifiers of different modules configured by the terminal for transmission.

A plurality of antenna panels support simultaneous UL transmission from the plurality of antenna panels, which may be understood to mean that the terminal supports simultaneous UL transmission from the plurality of antenna panels to a plurality of TRPs. That is, the terminal may simultaneously determine a transmission power of the plurality of antenna panels for performing UL transmissions so as to facilitate UL transmissions based on the determined transmission power for performing UL transmissions.

It should be noted that the indication information in the embodiment of the disclosure may indicate a closed-loop power adjustment state of each TRP or antenna panel and also indicates whether to reset an accumulation of closed-loop power adjustment state values of each TRP or antenna panel.

Or, the indication information includes two different indication information (i.e., first indication information and second indication information), the first indication information indicates a closed-loop power adjustment state value of each TRP or antenna panel, and the second indication information indicates whether to reset an accumulation of closed-loop power adjustment state values of each TRP or antenna panel.

In some embodiments, the indication information is carried in DCI, a Media Access Control Control Element (MAC CE) or a Radio Resource Control (RRC), which is not limited by the embodiment of the disclosure.

At step 402, the terminal receives the indication information.

After receiving the indication information, the terminal may determine the antenna panel or the TRP indicated by the indication information, and thereby determine which antenna panel or TRP needs to be subjected to a closed-loop power adjustment of its transmission power or reset an accumulation of closed-loop power adjustment state values of which antenna panel or TRP.

In the embodiment of the disclosure, the network device indicates the corresponding TRP or antenna panel to the terminal by sending the indication information, so that the terminal, after receiving the indication information, can specify which TPR or antenna panel's closed-loop power adjustment state value was obtained or which TPR or antenna panel's accumulation of the closed-loop power adjustment state values needs to be reset.

It should be noted that the steps performed by the terminal in the embodiments of the disclosure may constitute a new independent embodiment, and the steps performed by the network device may also constitute a new independent embodiment, which is not limited by the embodiment of the disclosure.

The disclosure provides a scheme for explicitly indicating a TRP or an antenna panel through indication information to ensure that the power adjustment or accumulation resetting by the terminal is directed to one TRP or one antenna panel, to ensure an accuracy of the terminal's adjustment or the resetting of the closed-loop power to enable the terminal to perform an UL transmission with an appropriate power, to ensure a sufficient transmit rate without causing significant interference with transmissions from other terminals.

In some embodiments, the terminal may indicate the closed-loop power adjustment state of the corresponding TRP or antenna panel based on a control resource set (CORESET) pool index or a closed-loop index, which will be explained in detail below.

In a possible implementation, in a case that the indication information indicates the closed-loop power adjustment state value of each TRP or antenna panel, the closed-loop power adjustment state value of the corresponding TRP or antenna panel is determined based on the CORESET pool index.

The CORESET pool index indicates a CORESET pool, and the CORESET pool indexes is different for PDCCHs sent by different TRPs. It may be stipulated that only closed-loop power adjustment state value indicated by a TPC field of a PDCCH with the same CORESET pool index can be accumulated according to the closed-loop index. In some embodiments, each CORESET corresponds to a CORESET pool index, and If not explicitly configured, the index is 0 by default.

That is, in the embodiment of the disclosure, a correspondence between the CORESET pool index and the closed-loop power adjustment state value is added, by which the CORESET pool index implicitly indicates the antenna panel or the TRP corresponding to the value indicated by the TPC field, so that the terminal may accumulate based on the same antenna panel or TRP.

For example, the CORESET pool index is CORESETPoolIndex.

In an embodiment of the disclosure, the CORESETPoolIndex is added to $f(l,i) = f(i-i_0,l) + \sum\delta$, to obtain $f(i,l,t) = f(i-i_0,l,t) + \sum\delta$, where t represents the CORESETPoolIndex, $\delta$ represents a closed-loop power adjustment state value indicated by a TPC command, and i represents a time, which indicates a current time. Moreover, $f(i,l,t)$ represents accumulation, i.e., the accumulation of closed-loop power adjustment state values of an antenna panel or a TRP corresponding to the CORESETPoolIndex.

In another possible implementation, in a case that the indication information indicates the closed-loop power adjustment state value of each TRP or antenna panel, the closed-loop power adjustment state value of the corresponding TRP or antenna panel is determined based on a closed-loop index.

The closed-loop index may indicate a TRP or antenna panel. That is, the TRP or antenna panel can be differentiated by the closed-loop index, so as to facilitate the terminal in determining the closed-loop power adjustment state value to be accumulated for different TRP or antenna panel.

In some embodiments, the closed-loop index is a parameter in a power control parameter set. In addition to the closed-loop index, the power control parameter set also includes at least one of an open-loop received power target value, a partial path loss compensation factor, or a downlink path loss estimation value.

In an embodiment of the disclosure, the terminal sends a PUSCH to a TRP. For example, the terminal may send respective PUSCHs to different TRPs via different antenna panels.

In some embodiments, in response to the respective PUSCHs sent to the different TRPs by the terminal including a configured grant (CG) PUSCH and a dynamic grant (DG) PUSCH, a closed-loop index of the CG PUSCH is configured to be different from a closed-loop index of the DG PUSCH. That is, in the embodiment of the disclosure, different TRPs or antenna panels are distinguished by different closed-loop indexes.

The closed-loop index of the CG PUSCH is configured by power control, and the closed-loop index of the DG PUSCH corresponds to a TCI state. In some embodiments, the closed-loop index of the CG PUSCH is configured by powerControlLoopToUse in ConfiguredGrantConfig. The closed-loop index of the DG PUSCH corresponds to the TCI state, and it is required that the closed-loop index associated with each TCI state is different from the closed-loop index configured by powerControlLoopToUse.

In some embodiments, the network device may send configuration information to the terminal, and configure a power control parameter for the terminal through the configuration information. In an embodiment of the disclosure, the configuration information is used to configure different closed-loop indexes for the CG PUSCH and the DG PUSCH, respectively.

In some embodiments, in response to a plurality of PUSCHs sent to the plurality of TRPs including a plurality of DG PUSCHs, a power control parameter set list is configured for each TRP, respectively. Different power control parameter set lists include different closed-loop indexes, and the closed-loop indexes configured in respective power control parameter set list have different values.

In response to the PUSCHs sent to the plurality of TRPs including a plurality of DG PUSCHs, different closed-loop indexes may be indicated for UL transmissions for each TRP. That is, when indicating the power control parameter set for the PUSCH of each TRP, it is ensured that the closed-loop indexes in the parameter set have different values.

For example, if a plurality of DG PUSCHs include a DG PUSCH1 and a DG PUSCH2, a power control parameter set 1 may be indicated for the DG PUSCH1, and a power control parameter set 2 may be indicated for the DG PUSCH2. The closed-loop indexes in the power control parameter set 1 are different from the closed-loop indexes in the power control parameter set 2.

In some embodiments, the network device may send configuration information to the terminal, in order to configure a power control parameter for the terminal through the configuration information.

In an embodiment of the disclosure, the configuration information is used to configure a power control parameter set for each DG PUSCH, respectively, and different power control parameter sets include different closed-loop indexes.

It should be noted that when configuring a TCI state for the terminal in the embodiment of the disclosure, an association relationship between a power control parameter set and a TCI state is not configured, but rather the power control parameter sets is configured directly for different TRP or antenna panel.

In an embodiment of the disclosure, the respective power control parameter set is configured for each TRP via BWP-ULDedicated.

In some embodiments, in response to the plurality of PUSCHs sent to the plurality of TRPs including a plurality of DG PUSCHs, a power control parameter set list is indicated for each DG PUSCH, and respective power control parameter set associated with the TCI state corresponding to each TRP is configured.

In the embodiment of the disclosure, a power control parameter set list is configured for the terminal. After a beam measurement result of each TRP is determined through beam management, an association relationship between a TCI state corresponding to a beam of each TRP and a power control parameter set is configured, and it is necessary to ensure that the closed-loop indexes associated with the TCI state of each TRP are different.

In an embodiment of the disclosure, when configuring the TCI state for the terminal, the association relationship between the TCI state and the power control parameter set is decoupled. That is, a TCI state list and a power control parameter set list are configured for the terminal, respectively, and the beam measurement result of each TRP is determined based on the beam management, and then the association relationship between the TCI state corresponding to the beam to be used by each TRP and the power control parameter set is configured. The closed-loop indexes in the power control parameter sets associated with the TCI state corresponding to the beams of each TRP need to be the same, and different TRPs have different closed-loop indexes.

In some embodiments, the network device may send configuration information to the terminal, in order to configure a power control parameter for the terminal through the configuration information.

In an embodiment of the disclosure, the configuration information is used to configure a power control parameter set list for each DG PUSCH, and configure a power control parameter set associated with a TCI state corresponding to each TRP.

In some embodiments, in response to the plurality of PUSCHs sent to the plurality of TRPs including a plurality of DG PUSCHs, when a TCI state is activated for each TRP, a power control parameter set corresponding to the TCI state is indicated.

In the embodiment of the disclosure, the terminal configures a TCI state list in advance, and the terminal needs to activate the TCI state for each TRP through signaling. When activating the TCI state, an association relationship between each TCI state and the power control parameter set may be indicated. The closed-loop indexes in the power control parameter sets associated with the activated TCI state of different TRPs are different.

In an embodiment of the disclosure, the signaling used to activate the TCI state may be DCI, a MAC CE, an RRC or other signaling, which is not limited by the embodiment of the disclosure.

In some embodiments, the network device may send configuration information to the terminal, in order to configure a power control parameter for the terminal through the configuration information.

In an embodiment of the disclosure, the UL channel includes a plurality of DG PUSCHs, and the configuration information indicates a power control parameter set corresponding to a TCI state when the TCI state is activated for each TRP.

In the solution provided in the embodiment of the disclosure, the indication information indicates a closed-loop power adjustment state value of each TRP or antenna panel. The terminal can determine a corresponding TRP or antenna panel based on a CORESET pool index or a closed-loop index, and then perform an UL transmission power adjustment based on the single TRP or antenna panel, which ensures an accuracy of the UL transmission power adjustment of the terminal, thereby improving a reliability of communications of the terminal.

In some embodiments, the terminal may indicate whether to reset an accumulation of closed-loop power adjustment state values of a corresponding TRP or antenna panel based on a CORESET pool index or a closed-loop index, which is explained in detail below.

In a possible implementation, in a case that the indication information indicates to reset the accumulation of the closed-loop power adjustment state values of each TRP or antenna panel, it is determined that the accumulation of the closed-loop power adjustment state values of the corresponding TRP or antenna panel is reset based on the CORESET pool index.

The CORESET pool index indicates a CORESET pool, and the CORESET pool indexes is different for PDCCHs sent by different TRPs. It may be stipulated that only closed-loop power adjustment state value indicated by a TPC field of a PDCCH with the same CORESET pool index can be accumulated according to the closed-loop index. In some embodiments, each CORESET corresponds to a CORESET pool index, and if not explicitly configured, the index is 0 by default.

That is, in the embodiment of the disclosure, a correspondence between the CORESET pool index and the closed-loop power adjustment state value is added, by which the CORESET pool index implicitly indicates the antenna panel or the TRP corresponding to the value indicated by the TPC field, so that the terminal may accumulate based on the same antenna panel or TRP.

For example, the CORESET pool index is CORESETPoolIndex.

In an embodiment of the disclosure, the CORESETPoolIndex is added to $f(l,i) = f(i\text{-}i_0,l) + \sum\delta$, to obtain $f(i,l,t) = f(i\text{-}i_0, t) + \sum\delta$, where $t$ represents the CORESETPoolIndex, $\delta$ represents a closed-loop power adjustment state value indicated by a TPC command, and i represents a time, which indicates a current time. Moreover, $f(i,l,t)$ represents accumulation, i.e., the accumulation of closed-loop power adjustment state values of an antenna panel or a TRP corresponding to the CORESETPoolIndex.

It should be noted that in the embodiment of the disclosure, the CORESET pool index may be used to indicate the corresponding TRP or antenna panel, and there may be a plurality of closed-loop indexes of the TRP or antenna panel. Therefore, after the terminal determines the corresponding TRP or antenna panel based on the CORESET pool index, it determines whether to reset the accumulation of the closed-loop power adjustment state values based on the closed loop index.

In an embodiment of the disclosure, the accumulation of the closed loop power adjustment state values corresponding to the closed loop index of the TRP or antenna panel corresponding to the CORESET pool index is reset.

In the embodiment of the disclosure, after determining the TRP or antenna panel corresponding to the CORESET pool index, the terminal resets the accumulation of the closed loop power adjustment state values corresponding to the closed loop index of the determined TRP or antenna panel.

For example, the accumulation of the closed power adjustment state values of the TRP or antenna panel corresponding to the CORESET pool index of the scheduled DCI corresponding to the PDSCH that sends the indication information is reset. In detail, the accumulation of the closed-loop power adjustment state values corresponding to the closed loop index associated with the TCI state of the TRP or antenna panel corresponding to the CORESET pool index is reset.

In some embodiments, the indication information includes an updated transmission power or a path loss compensation factor. That is, in a case that the indication information includes the updated transmission power or the path loss compensation factor, it is determined that the reset is triggered.

In an embodiment of the disclosure, in response to the TRP or antenna panel corresponding to the CORESET pool index not including the closed-loop index, accumulations of closed-loop power adjustment state values corresponding to all closed-loop indexes corresponding to the TRP or antenna panel corresponding to the CORESET pool index are reset.

In the embodiment of the disclosure, if the TRP or antenna panel corresponding to the CORESET pool index does not include the closed-loop index, the reset of accumulations of the closed-loop power adjustment state values corresponding to all closed-loop indexes involved in the TRP or antenna panel is required.

It should be noted that for the CG-PUSCH, a path corresponding to the closed loop index configured by powerControlLoopToUse in ConfiguredGrantConfig is reset.

In an embodiment of the disclosure, the indication information includes an updated transmission power or a path loss compensation factor. That is, in a case that the indication information includes the updated transmission power or the path loss compensation factor, it is determined that the reset is triggered.

It should be noted that in the embodiment of the disclosure, a new reset signaling is added, and the accumulation of the corresponding closed-loop power adjustment state values is indicated for reset by the CORESET pool index or the closed loop index included in the reset signaling.

In other embodiments, in a case that the indication information indicates to reset the accumulation of the closed-loop power adjustment state values of each TRP or antenna panel, it is determined that the accumulation of the closed-loop power adjustment state values of the corresponding TRP or antenna panel needs to be reset based on the closed loop index.

The closed loop index may indicate a TRP or an antenna panel. That is, the TRP or antenna panel can be differentiated by the closed loop index, so as to facilitate the terminal in resetting the accumulation of the closed-loop power adjustment state values for different TRP or antenna panes.

In some embodiments, the closed loop index is a parameter in the power control parameter set. In addition to the closed loop index, the power control parameter set also includes at least one of a target value of an open-loop received power, a partial path loss compensation factor or a downlink path loss estimation value.

In an embodiment of the disclosure, the terminal may send a PUSCH to a TRP. For example, the terminal may send the PUSCH to the TRP through an antenna panel.

In some embodiments, in response to the plurality of PUSCHs sent to the plurality of TRPs including a plurality of DG PUSCHs, or in response to the plurality of PUSCHs sent to the plurality of TRPs including a CG PUSCH and a DG PUSCH, the accumulation of the closed-loop power adjustment state values of the TRP or antenna panel corresponding to the closed loop index corresponding to the reconfigured desired transmission power or path loss compensation factor is reset.

In response to the plurality of PUSCHs sent to the plurality of TRPs including a plurality of DG PUSCHs, in order to distinguish different TRPs or antenna panels, the accumulation of the closed-loop power adjustment state values of the TRP or antenna panel corresponding to the closed loop index corresponding to the desired transmission power or path loss compensation factor is reset.

In some embodiments, the network device sends configuration information to the terminal, and configures a power control parameter for the terminal through the configuration information. In an embodiment of the disclosure, the configuration information is used to configure different closed loop indexes for the CG PUSCH and the DG PUSCH, respectively.

In an embodiment of the disclosure, the configuration information may be indication information, a reset signaling or a new signaling, which is not limited by the embodiment of the disclosure.

In the scheme provided by the embodiment of the disclosure, the indication information indicates to reset the accumulation of the closed-loop power adjustment state values of the TRP or antenna panel. The terminal determines the corresponding TRP or antenna panel based on the CORESET pool index or the closed loop index, so as to reset the accumulation of the closed-loop power adjustment state values based on single TRP or antenna panel. Therefore, the terminal can perform UL transmission with an appropriate power, which ensures a sufficient transmit rate without causing significant interference with transmissions from other terminals.

FIG. 5 is a schematic diagram of an apparatus for adjusting an UL transmission power provided by an example embodiment of the disclosure. As illustrated in FIG. 5, the apparatus includes:

a receiving module 501, configured to receive indication information, in which the indication information indicates a closed-loop power adjustment state value of each TRP or antenna panel, and/or indicates whether to reset an accumulation of the closed-loop power adjustment state values of each TRP or antenna panel, and the closed-loop power adjustment state is used to adjust an UL transmission power of UL channels simultaneously transmitted from a plurality of antenna panels to a plurality of TRPs.

In some embodiments, as illustrated in FIG. 6, the apparatus further includes:

a determining module 502, configured to, in a case that the indication information indicates the closed-loop power adjustment state value of each TRP or antenna panel, determine a closed-loop power adjustment state value of a corresponding TRP or antenna panel based on a CORESET pool index.

In some embodiments, as illustrated in FIG. 6, the apparatus further includes:

a determining module 502, configured to, in a case that the indication information indicates the closed-loop power adjustment state value of each TRP or antenna panel, determine a closed-loop power adjustment state value of a corresponding TRP or antenna panel based on a closed-loop index.

In some embodiments, in response to PUSCHs sent to a plurality of TRPs including a CG PUSCH and a DG PUSCH, a closed-loop index of the CG PUSCH is configured to be different from a closed-loop index of the DG PUSCH; and

the closed-loop index of the CG PUSCH is configured by power control, and the closed-loop index of the DG PUSCH corresponds to a TCI state.

In some embodiments, in response to PUSCHs sent to the plurality of TRPs including a plurality of DG PUSCHs, a power control parameter set is configured for each DG PUSCH, respectively, and different power control parameter sets include different closed-loop indexes;

or,

in response to the PUSCHs sent to the plurality of TRPs including a plurality of DG PUSCHs, a power control parameter set list is configured for each DG PUSCH, and a power control parameter set associated with a TCI state corresponding to each TRP is configured;

or,

in response to the PUSCHs sent to the plurality of TRPs including a plurality of DG PUSCHs, when a TCI state is activated for each TRP, a power control parameter set corresponding to the TCI state is indicated.

In some embodiments, as illustrated in FIG. 6, the apparatus further includes:

a determining module 502, configured to, in a case that the indication information indicates to reset the accumulation of the closed-loop power adjustment state values of each TRP or antenna pane, determine to reset an accumulation of closed-loop power adjustment state values of a corresponding TRP or antenna panel based on a CORESET pool index.

In some embodiments, the determining module 502 is configured to:

reset an accumulation of closed-loop power adjustment state values corresponding to a closed-loop index of the TRP or antenna panel corresponding to the CORESET pool index;

or,

in response to the TRP or antenna panel corresponding to the CORESET pool index not including the closed-loop index, reset accumulations of closed-loop power adjustment state values corresponding to all closed-loop indexes corresponding to the TRP or antenna panel corresponding to the CORESET pool index.

In some embodiments, the indication information includes an updated transmission power or a path loss compensation factor.

In some embodiments, as illustrated in FIG. 6, the apparatus further includes:

a determining module 502, configured to, in a case that the indication information indicates to reset the accumulation of the closed-loop power adjustment state values of each TRP or antenna pane, determine to reset an accumulation of closed-loop power adjustment state values of a corresponding TRP or antenna panel based on a closed-loop index.

In some embodiments, the determining module 502 is configured to:

in response to PUSCHs sent to the plurality of TRPs including a plurality of DG PUSCHs, reset an accumulation of closed-loop power adjustment state values of a TRP or an antenna panel corresponding to a closed loop index corresponding to an desired transmission power or a path loss compensation factor;

or,

in response to the PUSCHs sent to the plurality of TRPs including the plurality of DG PUSCHs, reset accumulations of closed-loop power adjustment state values of TRPs or antenna panels corresponding to all closed loop indexes;

or,

in response to the PUSCHs sent to the plurality of TRPs including a CG PUSCH and a DG PUSCH, reset an accumulation of closed-loop power adjustment state values of a TRP or an antenna panel corresponding to a closed loop index corresponding to an updated desired transmission power or path loss compensation factor.

It should be noted that the apparatus provided in the above embodiments, when implementing its functions, only uses the classification of the above-mentioned functional modules as an example. In actual applications, the above-mentioned functions can be allocated to different functional modules as needed. That is, the internal structure of the apparatus can be divided into different functional modules to complete all or part of the functions described above. Moreover, the apparatus embodiments and the method embodiments provided in the above embodiments belong to the same concept, and the specific implementation processes in the apparatus embodiments are described in detail in the method embodiments, which will not be repeated here.

FIG. 7 is a schematic diagram of an apparatus for adjusting an UL transmission power provided by an example embodiment of the disclosure. As illustrated in FIG. 7, the apparatus includes:

a sending module 701, configured to send indication information, in which the indication information indicates a closed-loop power adjustment state value of each TRP or antenna panel and/or indicates whether to reset an accumulation of the closed-loop power adjustment state values of each TRP or antenna panel, and the closed-loop power adjustment state value is used to adjust an UL transmission power of UL channels simultaneously transmitted from a plurality of antenna panels to a plurality of TRPs.

In some embodiments, the sending module 701 is further configured to: send configuration information, in which the configuration information is used to configure a power control parameter.

In some embodiments, the configuration information is used to configure different closed-loop indexes for a CG PUSCH and a DG PUSCH, respectively;

or,

the configuration information is used to configure a power control parameter set for each DG PUSCH, and different power control parameter sets include different closed-loop indexes;

or,

the configuration information is used to configure a power control parameter set list for each DG PUSCH, and to configure a power control parameter set associated with a TCI state corresponding to each TRP;

or,

the configuration information is used to, when a TCI state is activated for each TRP, indicate a power control parameter set corresponding to the TCI state.

It should be noted that the apparatus provided in the above embodiments, when implementing its functions, only uses the classification of the above-mentioned functional modules as an example. In actual applications, the above-mentioned functions can be allocated to different functional modules as needed. That is, the internal structure of the apparatus can be divided into different functional modules to complete all or part of the functions described above. Moreover, the apparatus embodiments and the method embodiments provided in the above embodiments belong to the same concept, and the specific implementation processes in the apparatus embodiments are described in detail in the method embodiments, which will not be repeated here.

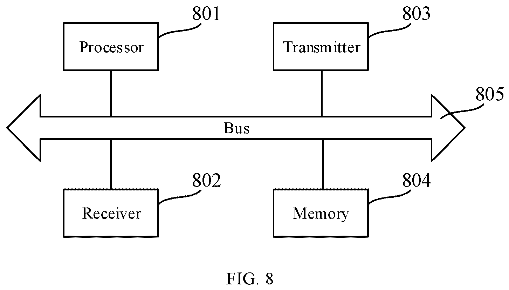

FIG. 8 is a schematic structural diagram of a communication device provided by an example embodiment of the disclosure. The communication device includes: a processor 801, a receiver 802, a transmitter 803, a memory 804 and a bus 805.

The processor 801 includes one or more processing cores. The processor 801 executes various functional applications and information processing by running software programs and modules.

The receiver 802 and the transmitter 803 may be realized as a communication component, such as a communication chip.

The memory 804 is connected to the processor 801 through the bus 805.

The memory 804 is configured to store at least one program code, and the processor 801 is configured to execute the at least one program code to realize the steps in the above method embodiments.

In addition, the communication device may be a terminal or a network device. The memory 804 may be implemented by any type of volatile or non-volatile storage devices or combinations thereof. The volatile or non-volatile storage devices include but are not limited to: a magnetic disk or an optical disk, an Electrically Erasable Programmable Read-Only Memory (EEPROM), an Erasable Programmable ROM (EPROM), a Static Random Access Memory (SRAM), a Read-Only Memory (ROM), a magnetic memory, a flash memory and a programmable ROM (PROM).

In an example embodiment, a computer-readable storage medium is provided. The computer-readable storage medium stores an executable program code, and the executable program code is loaded and executed by a processor to implement the method for adjusting an uplink transmission power performed by the communication device in the above-mentioned method embodiments.

In an example embodiment, a chip is provided. The chip includes a programmable logic circuit and/or a program instruction. When the chip runs on a terminal or a network device, the method for adjusting an uplink transmission power performed by the communication device in the above-mentioned method embodiments is implemented.

In an example embodiment, a communication system is provided. The communication system includes a terminal and a network device. The terminal is used to implement the above method for adjusting the uplink transmission power on the terminal side, and the network device is used to implement the method for adjusting the uplink transmission power on the network device side.

In an example embodiment, a computer program product is provided. When the computer program product is executed by a processor of a terminal or a network device, the method for adjusting an uplink transmission power performed by the communication device in the above-mentioned method embodiments is implemented.

Those skilled in the art understand that all or part of the steps to implement the above embodiments may be accomplished by hardware or by instructing related hardware through a program. The program may be stored in a computer-readable storage medium, which may be a ROM, a disk or an optical disk, etc.

The above are only optional embodiments of the disclosure and are not intended to limit the disclosure. Any modifications, equivalent substitutions, improvements, etc. made within the spirit and principles of the disclosure should be included in the protection scope of the disclosure.

## Claims

1. A method for adjusting an uplink transmission power, performed by a terminal, comprising:
   receiving indication information, wherein the indication information indicates a closed-loop power adjustment state value of each transmission reception point (TRP) or antenna panel, and/or whether to reset an accumulation of closed-loop power adjustment state values of each TRP or antenna panel, and the closed-loop power adjustment state value is used to adjust an uplink transmission power of uplink channels simultaneously transmitted from a plurality of antenna panels to a plurality of TRPs.

2. The method of claim 1, further comprising:
   in a case that the indication information indicates the closed-loop power adjustment state value of each TRP or antenna panel, determining a closed-loop power adjustment state value of a corresponding TRP or antenna panel based on a control resource set (CORESET) pool index.

3. The method of claim 1, further comprising:
   in a case that the indication information indicates the closed-loop power adjustment state value of each TRP or antenna panel, determining a closed-loop power adjustment state value of a corresponding TRP or antenna panel based on a closed-loop index.

4. The method of claim 3, wherein in response to physical uplink shared channels (PUSCHs) sent to the plurality of TRPs comprising a configured grant (CG) PUSCH and a dynamic grant (DG) PUSCH, a closed-loop index of the CG PUSCH is configured to be different from a closed-loop index of the DG PUSCH; and
   the closed-loop index of the CG PUSCH is configured by power control, and the closed-loop index of the DG PUSCH corresponds to a transmission configuration indicator (TCI) state.

5. The method of claim 3, wherein in response to PUSCHs sent to the plurality of TRPs comprising a plurality of DG PUSCHs, a power control parameter set is configured for each DG PUSCH respectively, and different power control parameter sets comprise different closed-loop indexes;
   or,

   in response to the PUSCHs sent to the plurality of TRPs comprising a plurality of DG PUSCHs, a power control parameter set list is configured for each DG PUSCH, and a power control parameter set associated with a TCI state corresponding to each TRP is configured;

or,

in response to the PUSCHs sent to the plurality of TRPs comprising a plurality of DG PUSCHs, when a TCI state is activated for each TRP, a power control parameter set corresponding to the TCI state is indicated.

6. The method of claim 1, further comprising:
in a case that the indication information indicates to reset the accumulation of the closed-loop power adjustment state values of each TRP or antenna panel, determining to reset an accumulation of closed-loop power adjustment state values of a corresponding TRP or antenna panel based on a CORESET pool index.

7. The method of claim 6, wherein determining to reset the accumulation of the closed-loop power adjustment state values of the corresponding TRP or antenna panel based on the CORESET pool index comprises:

resetting an accumulation of closed-loop power adjustment state values corresponding to a closed-loop index of the TRP or antenna panel corresponding to the CORESET pool index;

or,

in response to the TRP or antenna panel corresponding to the CORESET pool index not comprising the closed-loop index, resetting accumulations of closed-loop power adjustment state values corresponding to all closed-loop indexes corresponding to the TRP or antenna panel corresponding to the CORESET pool index.

8. The method of claim 6 or 7, wherein the indication information comprises an updated transmission power or a path loss compensation factor.

9. The method of claim 1, further comprising:
in a case that the indication information indicates to reset the accumulation of the closed-loop power adjustment state values of each TRP or antenna panel, determining to reset an accumulation of closed-loop power adjustment state values of a corresponding TRP or antenna panel based on a closed-loop index.

10. The method of claim 9, wherein determining to reset the accumulation of the closed-loop power adjustment state values of the corresponding TRP or antenna panel based on the closed-loop index, comprises:
in response to PUSCHs sent to the plurality of TRPs comprising a CG PUSCH and a DG PUSCH or the PUSCHs sent to the plurality of TRPs comprising a plurality of DG PUSCHs, resetting an accumulation of closed-loop power adjustment state values of a TRP or antenna panel corresponding to a closed-loop index corresponding to an updated desired transmission power or a path loss compensation factor.

11. A method for adjusting an uplink transmission power, performed by a network device, comprising:
sending indication information, wherein the indication information indicates a closed-loop power adjustment state value of each TRP or antenna panel, and/or whether to reset an accumulation of closed-loop power adjustment state values of each TRP or antenna panel, and the closed-loop power adjustment state value is used to adjust an uplink transmission power of uplink channels simultaneously transmitted from a plurality of antenna panels to a plurality of TRPs.

12. The method of claim 11, further comprising:
sending configuration information, wherein the configuration information is used to configure a power control parameter.

13. The method of claim 12, wherein

the configuration information is used to configure different closed-loop indexes for a CG PUSCH and a DG PUSCH respectively;

or,

the configuration information is used to configure a power control parameter set for each DG PUSCH, and different power control parameter sets comprise different closed-loop indexes;

or,

the configuration information is used to configure a power control parameter set list for each DG PUSCH, and to configure a power control parameter set associated with a TCI state corresponding to each TRP;

or,

the configuration information is used to, when a TCI state is activated for each TRP, indicate a power control parameter set corresponding to the TCI state.

14. An apparatus for adjusting an uplink transmission power, comprising:
a receiving module, configured to receive indication information, wherein the indication information indicates a closed-loop power adjustment state value of each TRP/antenna panel, and/or indicates whether to reset an accumulation of closed-loop power adjustment state values of each TRP or antenna panel, and the closed-loop power adjustment state value is used to adjust an uplink transmission power of uplink channels simultaneously transmitted from a plurality of antenna panels to a plurality of TRPs.

15. An apparatus for adjusting an uplink transmission power, comprising:
a sending module, configured to send indication information, wherein the indication information indicates a closed-loop power adjustment state value of each TRP/antenna panel, and/or indicates whether to reset an accumulation of closed-loop power adjustment state values of each TRP or antenna panel, and the closed-loop power adjustment state value is used to adjust an uplink transmission power of uplink channels simultaneously transmitted from a plurality of antenna panels to a plurality of TRPs.

16. A terminal, comprising:

a processor; and
a transceiver connected to the processor;
wherein the processor is configured to load and execute executable instructions to implement the method for adjusting the uplink transmission power according to any one of claims 1-10.

17. A network device, comprising:

a processor; and
a transceiver connected to the processor;
wherein the processor is configured to load and execute executable instructions to implement the method for adjusting the uplink transmission power according to any one of claims 11-13.

18. A communication system, comprising a terminal and a network device, wherein the terminal is used for implementing the method for adjusting the uplink transmission power according to any one of claims 1-10, and the network device is used for implementing the method for adjusting the uplink transmission power according to any one of claims 11-13.

19. A computer-readable storage medium, wherein the readable storage medium stores an executable program code, and the executable program code is loaded and executed by a processor, the processor is caused to perform the method for adjusting the uplink transmission power according to any one of claims 1-13.

FIG. 1

Terminal

FIG. 2

FIG. 3

Terminal

Network device

Step 401, the network device sends indication information, in which the indication information indicates a closed-loop power adjustment state value of each TRP or antenna panel, and/or indicates whether to reset an accumulation of closed-loop power adjustment state values of each TRP or antenna panel, and the closed-loop power adjustment state value is used to adjust an UL transmission power of UL channels simultaneously transmitted from a plurality of antenna panels to a plurality of TRPs

Step 402, the terminal receives the indication information

FIG. 4

Receiving module 501

FIG. 5

Receiving module 601

Determining module 602

FIG. 6

Sending module 701

FIG. 7

FIG. 8

## INTERNATIONAL SEARCH REPORT

| International application No. |
| --- |
| **PCT/CN2023/076606** |

**A. CLASSIFICATION OF SUBJECT MATTER**

H04W72/23(2023.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT: 天线, 面板, 集, 波束, 收发点, 传输接收点, 发送接收点, 闭环, 功率, 上行, 控制, 调节, 调整, 累积, 累加, 重置, 更新, antenna, panel, set, beam, TRP, close, loop, power, control, PUSCH, adjust, accumulate, reset, update

**C. DOCUMENTS CONSIDERED TO BE RELEVANT**

| Category* | Citation of document, with indication, where appropriate, of the relevant passages | Relevant to claim No. |
| --- | --- | --- |
| X | WO 2021155541 A1 (GUANGDONG OPPO MOBILE TELECOMMUNICATIONS CORP., LTD.) 12 August 2021 (2021-08-12)<br>description, page 5, line 10-page 12, third-to-last line | 1-19 |
| A | CN 110858996 A (VIVO MOBILE COMMUNICATION CO., LTD.) 03 March 2020 (2020-03-03)<br>entire document | 1-19 |
| A | CN 112640539 A (GUANGDONG OPPO MOBILE TELECOMMUNICATIONS CORP., LTD.) 09 April 2021 (2021-04-09)<br>entire document | 1-19 |
| A | CN 114258120 A (CHINA MOBILE COMMUNICATION LTD., RESEARCH INSTITUTE et al.) 29 March 2022 (2022-03-29)<br>entire document | 1-19 |
| A | WO 2021260658 A1 (TELEFONAKTIEBOLAGET LM ERICSSON (PUBL)) 30 December 2021 (2021-12-30)<br>entire document | 1-19 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 October 2023** | **23 October 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 668 971 A1**

**INTERNATIONAL SEARCH REPORT**
Information on patent family members

International application No.

**PCT/CN2023/076606**

| Patent document cited in search report | | | Publication date (day/month/year) | Patent family member(s) | Publication date (day/month/year) |
|---|---|---|---|---|---|
| WO | 2021155541 | A1 | 12 August 2021 | None | |
| CN | 110858996 | A | 03 March 2020 | None | |
| CN | 112640539 | A | 09 April 2021 | None | |
| CN | 114258120 | A | 29 March 2022 | None | |
| WO | 2021260658 | A1 | 30 December 2021 | None | |

Form PCT/ISA/210 (patent family annex) (July 2022)